Europäisches Patentamt

European Patent Office

Office européen des brevets

(11) Publication number: **0 363 710**
A2

## (12) EUROPEAN PATENT APPLICATION

(21) Application number: **89117577.0**

(51) Int. Cl.⁵: **G21C 5/02 , G21C 7/08**

(22) Date of filing: **22.09.89**

(30) Priority: **14.10.88 US 257672**

(43) Date of publication of application:
**18.04.90 Bulletin 90/16**

(84) Designated Contracting States:
**BE DE ES FR GB IT SE**

(71) Applicant: **WESTINGHOUSE ELECTRIC CORPORATION**
**Westinghouse Building Gateway Center**
**Pittsburgh Pennsylvania 15222(US)**

(72) Inventor: **Land, John Thomas**
**4020 Bedevere Drive**
**Pensacola Florida 32514(US)**
Inventor: **Hopkins, Ronald Jacobs**
**8270 Strasburg Road**
**Pensacola Florida 32514(US)**

(74) Representative: **Fleuchaus, Leo, Dipl.-Ing. et al**
**Patentanwälte Helmut Schroeter, Klaus**
**Lehmann, Wulf Wehser, Rupprecht Holzer,**
**Wolfgang Gallo Ludwigstrasse 26**
**D-8900 Augsburg(DE)**

(54) **Combined support column and guide tube for use in a nuclear reactor.**

(57) The invention resides in a combination guide-tube and support-column assembly (70) which serves both as a control-rod-assembly guide tube and as a support column for supporting the upper core plate (12) of a nuclear reactor from the support plate (22) forming part of the latter's upper internals, and which combination guide-tube and support-column assembly is removable.

FIG 4A

EP 0 363 710 A2

# COMBINED SUPPORT COLUMN AND GUIDE TUBE FOR USE IN A NUCLEAR REACTOR

This invention relates generally to nuclear reactors and, more particularly, to improvements in the upper internals thereof.

As well known in the art, the upper internals of a nuclear reactor of the type used for electrical power generation are disposed above the reactor core composed of fuel assemblies in which heat is generated through controlled fissioning of nuclear fuel, such as uranium oxide pellets, contained in fuel rods. During reactor operation, pressurized coolant, usually water, is constantly circulated through the core to absorb much of the heat generated therein, and to transfer it to heat exchangers in steam generators there to be utilized in producing non-radioactive steam.

The rate of fissioning taking place in the fuel assemblies is regulated by means of control rods usually in the form of stainless-steel tubes containing a neutron absorbing material, the control rods, or rodlets, being arrayed in clusters each supported from a so-called spider connected to a drive rod which is operable to move the cluster of control rods deeper into or farther out of the associated fuel assembly, depending upon the desired modulation of the amount of heat generated therein.

Each control rod assembly constituted by a cluster of rodlets and the spider supporting them is guided in its movements by means of a guide tube extending between an upper support plate supported atop an upper core barrel and an upper core plate disposed at the bottom of the upper core barrel and supported above the fuel assemblies from the upper support plate, the control rod assembly extending through one of a plurality of flow aperture formed in the support plate, through the guide tube, and through one of a plurality of similar apertures formed in the upper core plate.

In order to facilitate servicing of the components within the upper core barrel, it is desirable for the guide tubes to be removable. Therefore, it has been customary to support the upper core plate by means of separate support columns secured to the upper support plate and having the upper core plate therebeneath secured thereto, and to support the guide tubes from the upper support plate only at their upper ends while restraining them against lateral movement at their lower ends by means of pins disposed on either the guide tubes or the upper core plate and slideably engaged in openings formed in the upper core plate or in lower end flanges of the guide tubes, respectively. This arrangement allows the guide tubes, once disconnected from the upper support plate, to be readily withdrawn.

However, there may be some concern that these pins used heretofore for the purpose of laterally supporting the lower ends of control-rod guide tubes might not be absolutely immune from stress corrosion cracking caused by stresses induced therein, a concern which is particularly felt where, as is often the case, the pins are formed from a material, e.g. Inconel 750, which has a coefficient of thermal expansion different from that of the guide tubes and the upper support and core plates usually made of stainless steel. If any of the pins were to break, metallic debris therefrom might become entrained in the coolant flow and be swept into the primary-system circulation pumps and there cause damage. Moreover, guide tubes which have lost their lateral support through breakage of their associated guide pins are vulnerable to cross-currents generated in the rapidly flowing pres surized coolant and which could cause such guide tubes to vibrate heavily and even to strike adjacent tubes.

It is the principal object of the present invention to alleviate these potential problems and concerns, and the invention accordingly resides in an internals assembly for a nuclear reactor including a support plate having coolant-flow apertures formed therein, a core plate spaced beneath the support plate and having formed therein coolant-flow apertures at least some of which are aligned each with one of the apertures in the support plate, and tubular members each adapted to receive a movable control rod assembly and extending between said core and support plates in axial alignment with an aligned pair of the apertures formed therein, **characterized in that** each of said tubular members forms part of a combination guide-tube and support-column assembly both for guiding the associated control rod assembly and for supporting the core plate from the support plate, said combination guide-tube and support-column assembly including lower mounting means for detachably fastening the tubular member to the core plate, and upper mounting means for detachably fastening the tubular member to the support plate, said lower and upper mounting means being disposed on the tubular member adjacent the core plate and the support plate, respectively, and at least one of the lower and upper mounting means including mounting lugs which extend radially outward into overlapping relationship with, and which are detachably fastened to, surface portions of the adjacent plate, said support plate having cutouts formed therein from the outer periphery of the respective aperture thereof aligned with said tubular member, and said cutouts being sized to allow free passage of said lug portions therethrough and being angularly displaced with respect to vertical planes of symmetry extending through said surface portions, thereby rendering said combination guide-tube and support-column assembly removable after detachment thereof from the core and support plates and rotation thereof to align said lug portions with the respective cutouts.

With this arrangement, the tubular member serving as a control-rod guide tube is firmly secured at both ends so that there is no need for any guide pins that might break. Moreover, the same tubular member forming part of the combination guide-tube and support-column assembly also serves to support the upper core plate from the support plate thereabove, thereby obviating the need for separate support columns and, hence, considerably reducing the amount of flow impeding structure present in the upper internals region as well as facilitating the assembly, disassembly and servicing of component parts therein. Finally, the combination guide-tube and support-column assembly affording these advantages is also readily removable.

In order to minimize thermal stresses, the upper core plate, the support plate, and the guide-tube and support-column assembly preferably are all made of the same type of metal, preferably No. 304 stainless steel.

Furthermore, in order to prevent localized jetting of pressurized coolant liable to cause control rods to vibrate, the guide-tube and support-column assembly embodying the invention preferably includes means providing fluid flow communication between the interior and exterior of said tubular member and having a total cross-sectional flow area substantially twice the cross-sectional flow area of the tubular member. Such fluid-flow communication may be provided by flow ports formed in the wall of said tubular member, which flow ports preferably are spaced substantially uniformly about the periphery of the tubular member, offset from each other in the longitudinal direction of the tubular member so as to maintain substantially uniform shear strength of the latter throughout the length thereof, and, where needed, of different cross-sectional flow areas so as to compensate for non-uniformities in fluid pressure within the tubular member. Alternatively or additionally, the aforesaid fluid-flow communication may be provided by flow slots defined by said lower mounting means of the guide-tube and support-column assembly.

A preferred embodiment of the invention will now be described, by way of example only, with reference to the accompanying drawings, in which:-

Figure 1 is a perspective, cut-away view of the type of reactor in which the combined guide tube and support column of the invention may be used;

Figure 2A is a partial cross-sectional side view of the bottom end of a conventional guide tube;

Figure 2B is a cross-sectional view taken along line 2B-2B of Fig. 2A;

Figure 3A is a partial cross-sectional side view of the top end of a conventional guide tube;

Figure 3B is a cross-sectional view taken along the line 3B-3B in Fig. 3A;

Figure 4A is a partial cross-sectional side view of the bottom end of a combination a guide tube and support column embodying the invention, which also illustrates the manner in which this tube is secured to the upper core plate of the reactor;

Figure 4B is a cross-sectional view taken along line 4B-4B of Fig. 4A;

Figure 5A is a partial cross-sectional side view of the upper end of the combined guide tube and support column embodying the invention;

Figure 5B is a cross-sectional view taken along line 5B-5B of Fig. 5A;

Figure 6A is a partial cross-sectional side view of the lower end of a modification of the combined guide tube and support column of the invention which utilizes offset lugs instead of flow ports to relieve water pressure, and

Figure 6B is a cross-sectional view taken along the line 6B-6B of Fig. 6A.

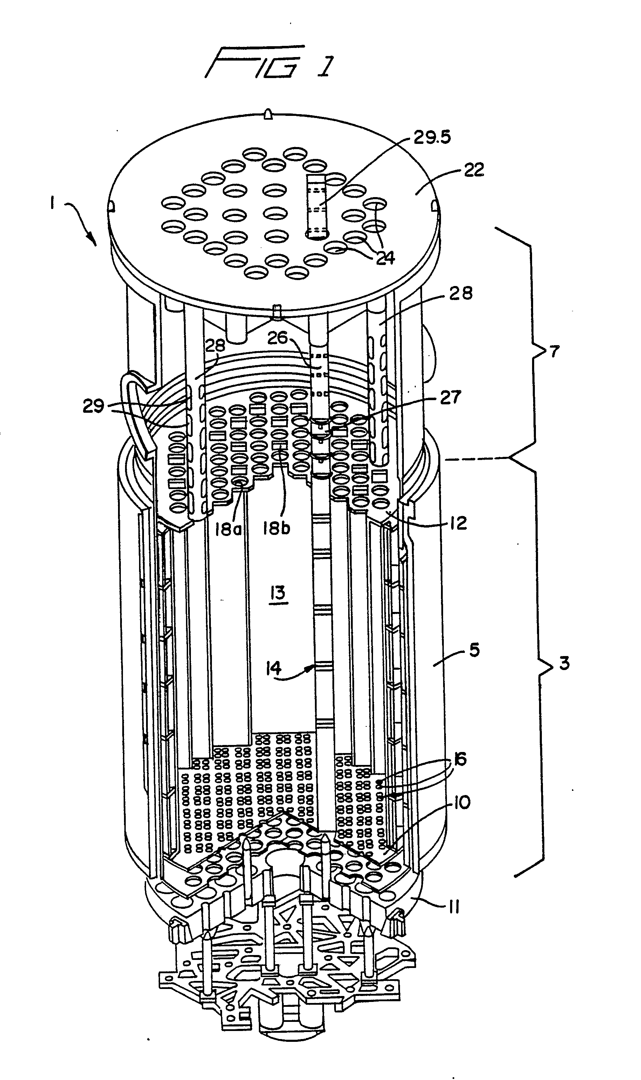

With particular reference now to Figure 1, the nuclear reactor illustrated therein and generally designated with numeral 1 includes a lower core barrel 3 circumscribed by a thermal shield 5, and an upper core barrel 7. The lower core barrel 3 has a floor formed by a lower core plate 10 which is supported on a core support forging 11, and a ceiling formed by an upper core plate 12. Baffle plates 13 disposed on the inside of the lower core barrel 3 and spaced therefrom serve to divert a portion of the flow of incoming primary water or coolant (not shown) upwardly for the purpose of cooling the lower core barrel, the remainder of the water flowing upwardly through the upper core plate 12 and, thence, into the upper core barrel 7. Fuel assemblies 14 (only one of which is shown ) are disposed, within the lower core barrel 3, between the lower and upper core plates 10, 12. During operation fissioning of the fuel within the fuel rods of the fuel rod assemblies 14 generates a considerable amount of heat which is transferred by the primary coolant to a steam generator (not shown) which converts this heat into nonradioactive steam.

In order to uniformly distribute the water flowing upwardly through the core support forging 11 and into the upper core barrel 7, both the lower core plate 10 and the upper core plate 12 each have formed therein a uniform array of flow apertures 16 and 18a, 18b, respectively, which are in mutual alignment with one another, each of the fuel assemblies 14 being aligned and in fluid flow communication with the respective flow apertures 18b and 16.

The upper core barrel 7 has a floor and a ceiling defined by the upper core plate 12 and an upper support plate 22, respectively. The upper support plate 22 likewise has flow apertures 24 formed therein each of which is aligned with one of the flow apertures 18b in the upper core plate 12. Disposed between each pair of mutually aligned apertures 24 and 18b is a guide tube 26 for guiding a control rod assembly 27 in its movements into and out of the associated fuel assemblies 14.

As will become more readily apparent from the following description, the upper core plate 12 is suspended over the fuel rod assemblies 14 not by the control rod guide tubes 26 but by means of support columns 28 (only of which is shown) which are tubular, just as the guide tubes 26, but have thicker walls. Each of these tubular support columns 28 has its open lower and aligned with one of the flow apertures 18a of the upper core plate 12, and has its open upper end up against and secured to a solid, i.e. non-apertured, portion of the upper support plate 22, a plurality of elongate flow holes 29 being formed in the walls of the column 27. The upper core plate 12, the support plate 22, the control rod guide tubes 26, and the support columns 28 preferably are all made of No. 304 stainless steel.

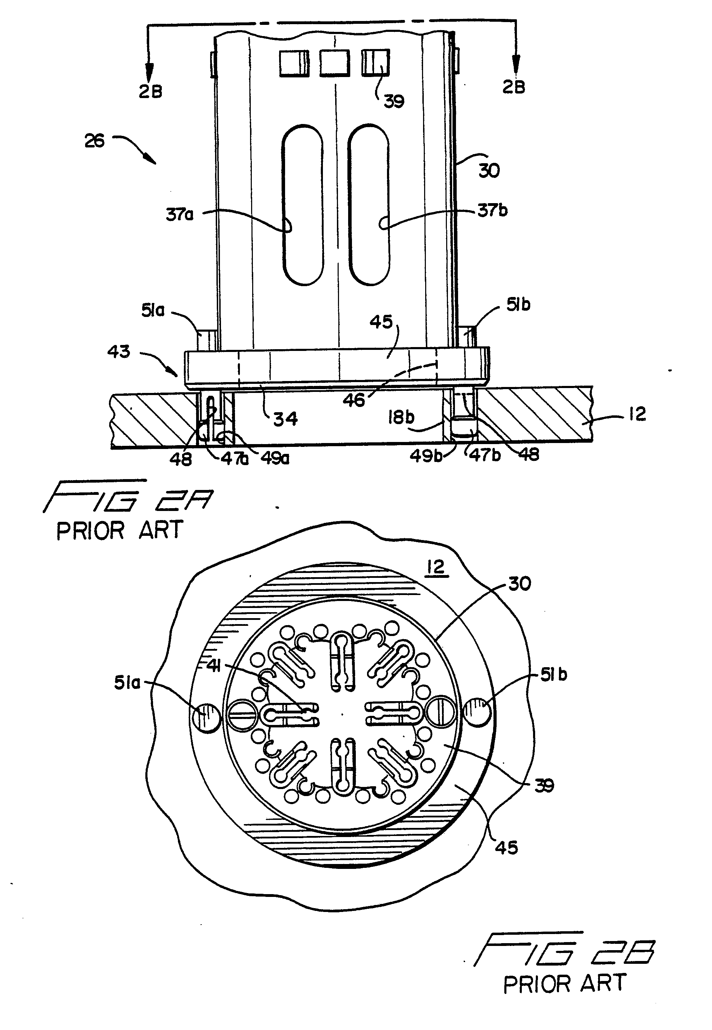

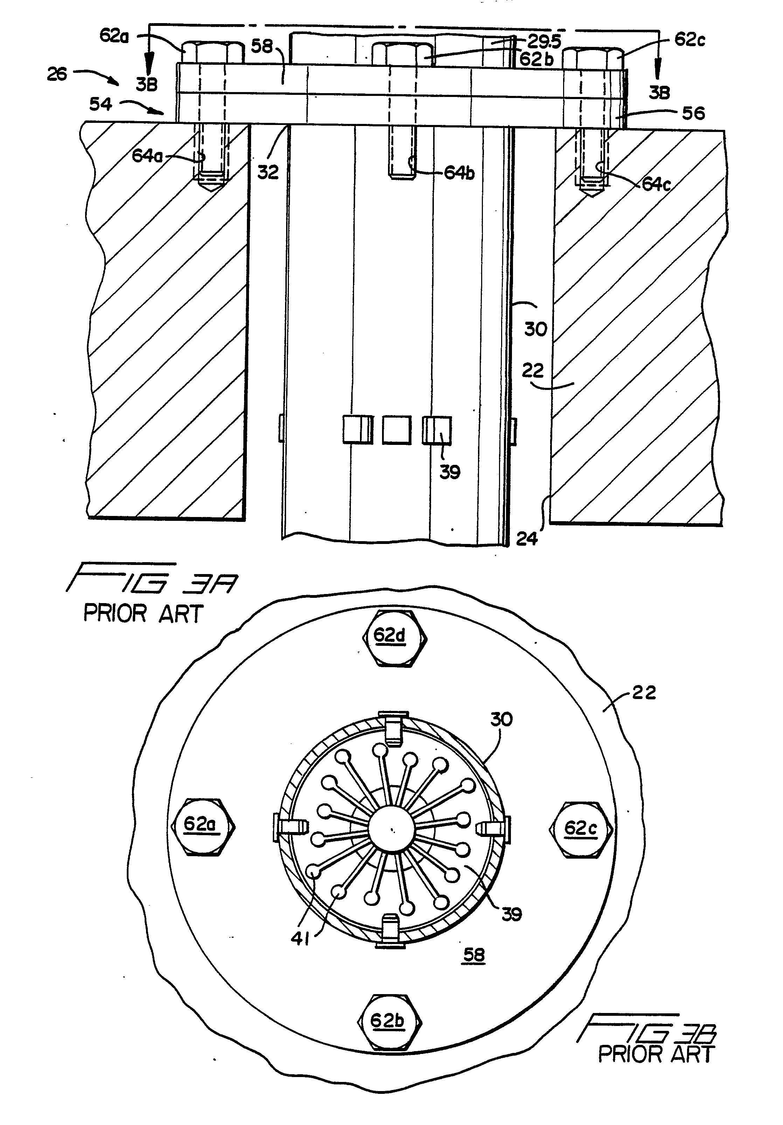

With reference now to Figures 2A, 2B, 3A and 3B, the conventional control rod guide tube 26 shown therein is an upright tubular member 30 having a top end 32 (Fig. 3A) and a bottom end 34 (Fig. 2A). The walls of the tubular member 30 are approximately 6.5 mm thick. With specific reference to Figures 2A and 2B, the tubular member 30 has a pair of flow ports 37a and 37b formed in its wall near the lower end thereof, and directly above these flow ports 37a, 37b contains a series of horizontal guide plates 39 which are uniformly spaced along the longitudinal axis of the guide tube 26 and support vertical guides 38a each defining guide channels 41 for receiving and guiding individual control rodlets of the control rod assembly 27. The circular lower open end of the tubular member 30 is maintained in alignment with the associated flow aperture 18b of the upper core plate 12 by means of a lower mounting assembly 43. The mounting assembly 43 comprises an annular flange 45 extending out around the tubular member 30 adjacent the lower end thereof and defining a water inlet opening 46 aligned with the associated flow aperture 18b of the upper core plate 12. Adjacent its outer edge, the flange 45 includes two diametrically opposed guide pins 47a and 47b, each of which has formed therein a central slot 48 imparting some resiliency to the end of the pin. The pins 47a and 47b are resiliently engaged in a pair of bores 49a and 49b formed in the upper core plate 12 on opposite sides of the flow aperture 18b, and they coact with the bores to firmly support the guide tube 26 laterally against flow-induced vibration. The guide pins 47a and 47b are secured to the annular flange 45 by means of lock nut assemblies 51a and 51b. Conventionally, the pins 47a, 47b and the lock nut assemblies 51a, 51b are made of Inconel[R] 750.

With specific reference to Figures 3A and 3B, at its upper end, the tubular member 30 forming the guide tube 26 extends through the associated flow apertures 24 in the upper support plate 22 and is secured to the latter by means of an upper mounting assembly 54 which likewise comprise an annular flange 56 extending around an upper edge portion of the tubular member 30 of the guide tube 26. The flange 56 is rigidly connected both to the bottom flange 58 of an upper guide tube 29.5 and to the upper support plate 22 by means of bolts 62a-62d which extend through holes in the flanges 58 and 56 and are threadedly engaged in tapped bores 64a-64d formed in the upper support plate 22. It will be appreciated that the guide tube 26 is fully supported from the upper mounting assembly 54 and at its lower end is merely held laterally through the engagement of the guide pins 47a, 47b with the bores 49a, 49b. In other words, there is no significant tensile load on the tubular member 30, all of the tensile load necessary to support the upper core plate 12 above the fuel assemblies 14 being borne by the previously discussed support columns 28.

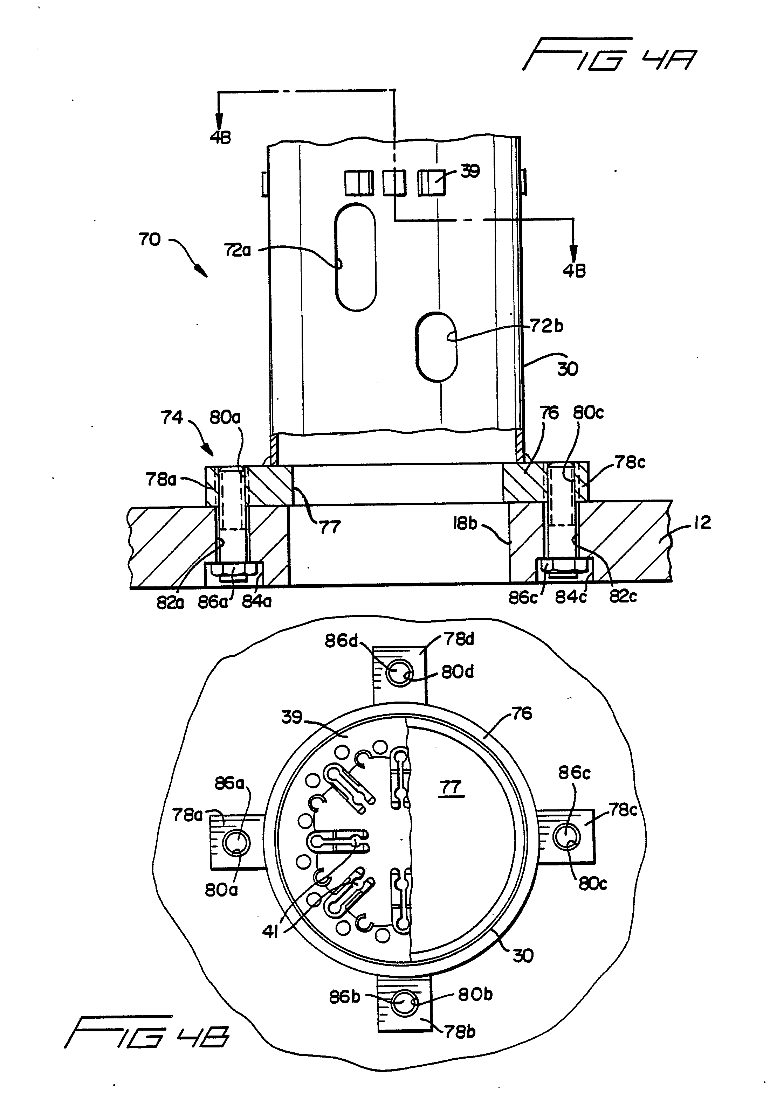

With reference now to Figures 4A and 4B, the combination guide tube and support column 70 embodying the invention includes a tubular member 30 and a series of uniformly spaced guide plates 39, much like the previously described guide tube 26 of the prior art, but these are essentially the only features which the invention has in common with the prior art. The tubular member 30 has formed in its wall flow ports 72a and 72b which differ from the conventional flow ports 37a and 37b in that preferably they have different flow cross-sectional areas to compensate for asymmetries in the flow resistance offered by the fuel rod assembly disposed in the tubular member 30 when in use. Furthermore, the combined cross-sectional flow area of the ports 72a and 72b is deliberately made to be about twice the cross-sectional flow area of an inlet opening 77 defined by an annular flange 76 circumscribing the bottom end of the tubular member 30. Such dimensioning helps to ensure against water jetting through the ports 72a and 72b such as could create in the upper core barrel lateral currents causing vibration and fretting of the control rod assemblies 27. In order to avoid non-uniformities in the shear strength of the tubular member 30, the flow ports 72a and 72b are offset with respect to the longitudinal axis of the guide tube and support column 70.

The combination guide tube and support column 70 includes a lower mounting assembly 74 comprising the annular flange 76 and preferably four lugs 78a-78d spaced equidistally apart and projecting radially outward from the flange 76. The lugs 78a-78d have formed therein threaded bores 80 which axially align with a set of four, orthogonally disposed holes 82a-82d formed through the upper core plate 12 adjacent the respective flow aperture 18b therein and each of which terminates at its lower end in a countersunk portion 84a-84d, respectively. The lower mounting assembly 74 is fastened to the upper core plate 12 by means of bolts 86a-86d extending through the holes 82a-82d and threadedly engaged in the bores 80a-80d, their bolt heads being received within the countersunk portions 84a-84d of the holes 82a-82d. The bolts 86a-86d are made of strain-hardened No. 316 stainless steel which is quite similar to the No. 304 stainless steel from which the upper core plate 12 and the tubular member 30 of the combination guide tube and support column 70 are formed, whereby undue thermal stresses and failure due to stress corrosion cracking are avoided.

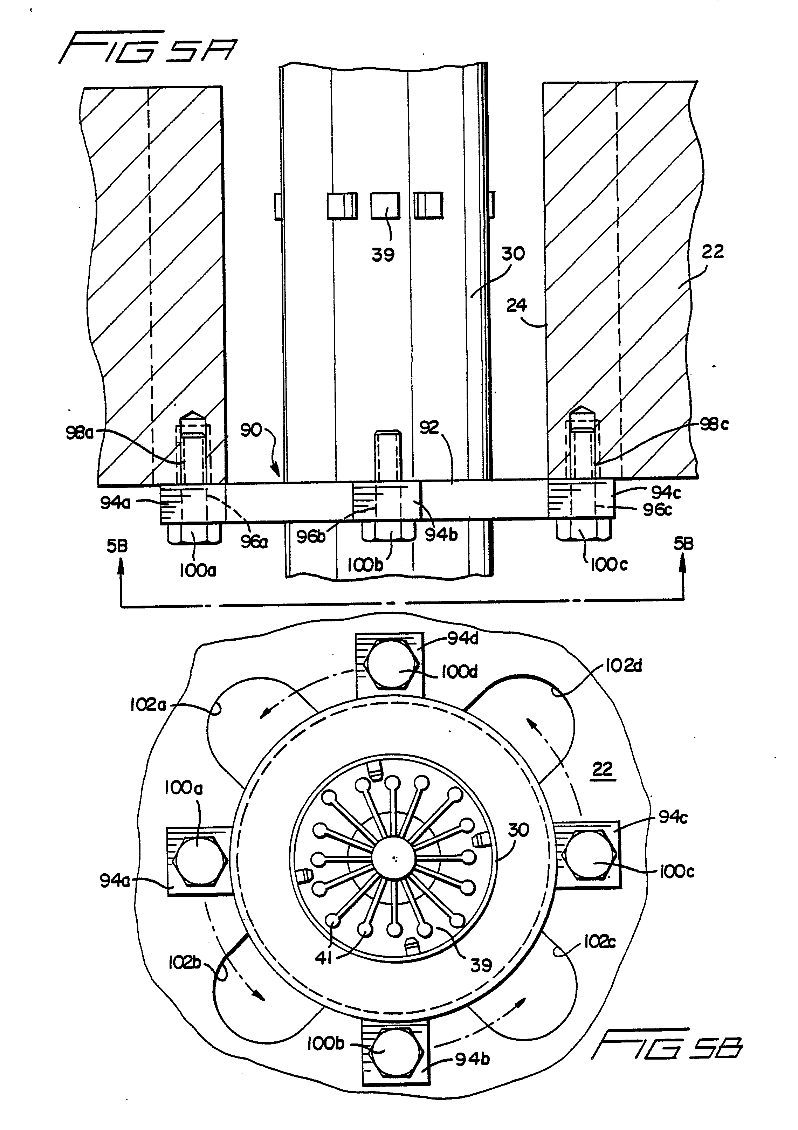

Referring to Figures 5A and 5B, the combination guide tube and support column 70 includes further an upper mounting assembly 90 comprising an annular flange 92 which circumscribes the tubular member 30 at an axial location thereon just below the upper support plate 22. The flange 92 which is suitably joined, e.g. welded, to the tubular member 30 includes four lugs 94a-94d spaced 90 degrees apart and projecting from the flange 92 radially outward, each of the lugs 94a-94d having formed therethrough a hole 96 which registers with one of four threaded bores 98a-98d formed into the support plate 22 from the underside thereof and adjacent the associated flow aperture 24. The flange 92 is fastened to the upper support plate 22 by means of bolts 100a-100d which extend through the holes 96a-96d and are threadedly engaged in the threaded bores 98a-98d, and which, too, are made preferably of strain-hardened No. 316 stainless steel.

As seen best from Figure 5B, the upper support plate 22 has formed therein four cutouts 102a-102d extending cloverleaf-like from the periphery of the respective flow aperture 24, each of these cutouts 102a-102d being sufficiently larger than each of the mounting lugs 94a-94d to enable such lug to pass freely therethrough. This cutout arrangement allows the whole combination guide tube and support column 70 to be readily removed by removing the bolts 86a-86d and 100a-100d of the lower and upper mounting assemblies 74 and 90, rotating the guide tube and support column 70, as indicated by the arrows in Fig. 5B, sufficiently, i.e. 45 degrees, to align the lugs 94a-94d with the respective cutouts 102a-102d, and then lifting out the whole guide tube and support column 70.

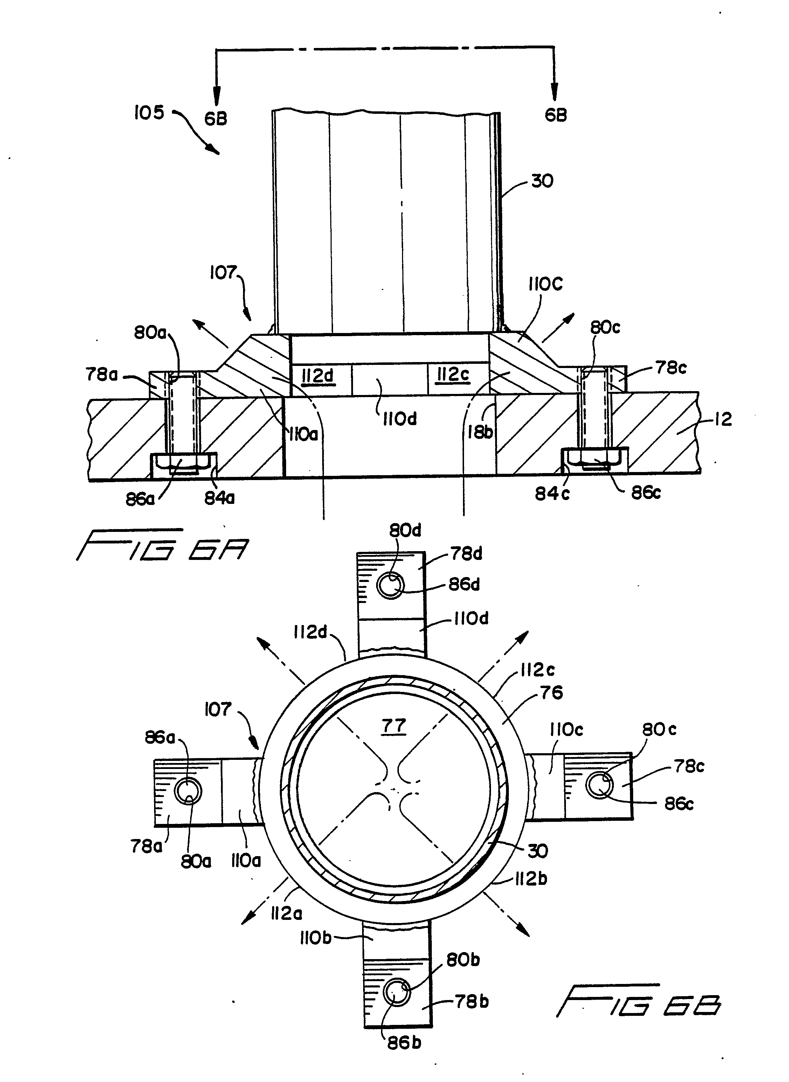

Figures 6A and 6B illustrate an alternative embodiment 105 of the invention wherein the upper mounting assembly (not shown) is identical to the upper mounting assembly 90 of the first embodiment and the lower mounting assembly 107 is similar to the previously described lower mounting assembly 74 but in which alternative embodiment 105 there are no flow ports such as ports 72a and 72b (Figure 4A), in the tubular member 30, and instead, the lugs 78a-78d are provided with offset portions 110a-110d so as to provide flow slots 112a-112d, the combined cross-sectional flow area of which is approximately twice the cross-sectional flow area of the inlet opening of the tubular member 30 at the lower end thereof. The individual flow areas of the slots 112a-112d may be made different from one another so as to balance the pressure of each stream of water flowing therefrom.

The use of either combined guide tube and support column 70 or 105 embodying the invention greatly simplifies the structure of the upper internals of the reactor core 1 by almost entirely obviating the need for separate support columns, such as columns 27 (Fig. 1). Such structural simplification comes without jeopardizing the relatively easy servicing features of the prior art, as either combination guide tube and support column 70 or 105 can be removed simply by unscrewing the bolts of the lower and upper mounting assemblies, turning the whole guide tube and support column about 45 degrees, and then lifting it from the upper core barrel 7. Furthermore, the preferred use of 304 stainless steel for the tubular members 30 and of a similar stainless steel for the mounting bolts 86a-86d and 100a-100d minimizes stresses generated as a result of differential thermal expansion, and thus reduces if not eliminates the probability of stress corrosion cracking.

## Claims

1. An internals assembly in a nuclear reactor including a support plate (22) having coolant-flow apertures (24) formed therein, a core plate (12) spaced beneath the support plate and having formed therein coolant-flow apertures (18) at least some of which are aligned each with one of the apertures (24) in the support plate, and tubular members (30) each adapted to receive a movable control rod assembly (27) and extending between said core and support plates (12, 22) in axial alignment with an aligned pair of the apertures (18, 24) formed therein, characterized in that each of said tubular members (30) forms part of a combination guide-tube and support-column assembly (70 or 105) both for guiding the associated control rod assembly (27) and for supporting the core plate (12) from the support plate (22), said combination guide-tube and support-column assembly (70 or 105) including lower mounting means (74 or 107) for detachably fastening the tubular member (30) to the core plate (12), and upper mounting means (90) for detachably fastening the tubular member to the support plate (22), said lower and upper mounting means (74 or 107; 90) being disposed on the tubular member (30) adjacent the core plate (12) and the support plate (22), respectively, and at least one of the lower and upper mounting means including mounting lugs (78; 94) which extend radially outward into overlapping relationship with, and which are detachably fastened to, surface portions of the adjacent plate (12 or 22), said support plate (22) having formed therein cutouts (102) extending from the outer periphery of the aperture (24) thereof aligned with said tubular member (30), and said cutouts (102) being sized to allow free passage of said lug portions (94; 78) therethrough and being angularly displaced with respect to vertical planes of symmetry extending through said surface portions, thereby rendering said combination guide-tube and support-column assembly removable after detachment thereof from the core and support plates (12, 22) and rotation thereof to align said lug portions with the respective cutouts.

2. An internals assembly according to claim 1, characterized in that said guide-tube and support-column assembly (70; 105) includes means (72 or 112) providing fluid flow communication between the interior and exterior of said tubular member (30) and having a total cross-sectional flow area substantially twice the cross-sectional flow area of the tubular member (30).

3. An internals assembly according to claim 2, characterized in that the fluid-flow communication providing means are flow ports (72) formed in the wall of said tubular member (30).

4. An internals assembly according to claim 3, characterized in that said flow ports (72) are circumferentially spaced about the tubular member (30) substantially uniformly.

5. An internals assembly according to claim 2 or 3, characterized in that said flow ports (72) have different cross-sectional flow areas to compensate for non-uniformities in fluid pressure within the tubular member (30).

6. An internals assembly according to claim 2, 3 or 4, characterized in that said flow ports (72) are offset from each other in the longitudinal direction of the tubular member (30) to maintain substantially uniform shear strength of the latter throughout the length thereof.

7. An internals assembly according to any one of claims 2 to 6, characterized in that the fluid-flow communication providing means are flow slots (112) defined by said lower mounting means (107).

8. An internals assembly according to any one of the preceding claims, characterized in that said core plate (12), said support plate (22), and said guide-tube and support-column assembly (70; 105) are all made of the same type of metal.

9. An internals assembly according to claim 8, characterized in that said metal is No. 304 stainless steel.

FIG 1

FIG 2A
PRIOR ART

FIG 2B
PRIOR ART

FIG 3A
PRIOR ART

FIG 3B
PRIOR ART

FIG 4A

FIG 4B

FIG 5A

FIG 5B

FIG 6A

FIG 6B